# DEMANDE DE BREVET EUROPEEN

(11) **EP 4 752 670 A1**
(43) Date de publication de la demande: **03.06.2026**
(21) Numéro de dépôt: 25218768.7
(22) Date de dépôt: 26.11.2025
(51) Int. Cl.: G05D 23/19, F24D 19/10, F16K 31/44

(54) **TETE THERMOSTATIQUE ELECTRONIQUE**

(30) Priorité: 29.11.2024 FR 2413228
(71) Demandeur: DELTA DORE, 35270 Bonnemain (FR)
(72) Inventeur: EVEN, Nicolas, 35270 BONNEMAIN (FR)
(74) Mandataire: Cabinet Le Guen Maillet

(57) **Abrégé**

Tête thermostatique électronique pour une vanne de radiateur, la tête thermostatique électronique comprenant une base (2) et une poignée (4) tournante liée à la base (2), la poignée (4) tournante étant montée en rotation avec un mouvement angulaire limité afin de passer d'une position neutre à une première position fonctionnelle ou bien une deuxième position fonctionnelle, la tête thermostatique étant telle que :
- la poignée (4) comprend une butée (6) en rotation.
- la base (2) comprend deux lames élastiques (8)
Lorsque la poignée (4) est en position neutre chaque lame élastique (8) est en contact avec la butée (6), une première lame élastique (8) permet de rappeler la poignée (4) de la première position fonctionnelle à la position neutre et une deuxième lame élastique (8) permet de rappeler la poignée (4) de la deuxième position fonctionnelle à la position neutre.

## Description

### DOMAINE TECHNIQUE

L'invention concerne une tête thermostatique électronique, et plus particulièrement une tête thermostatique électronique destinée à être installée sur un robinet d'un radiateur à eau chaude.

### ETAT DE LA TECHNIQUE ANTERIEURE

Il est connu d'avoir des têtes thermostatiques comprenant une base et une poignée pivotante.

Le plus souvent, la poignée pivotante tourne autour d'un axe longitudinal de la poignée et des repères visuels sur la base indiquent la position angulaire de la poignée par rapport à la base.

Les repères visuels peuvent par exemple correspondre à des niveaux de puissance de chauffe d'un radiateur. Ce type de tête thermostatique n'intègre pas de système de rappel. En d'autres termes, lorsque la poignée est déplacée en rotation, elle reste en position après que l'utilisateur l'ai lâchée.

Il existe aussi des têtes thermostatiques utilisant un mécanisme de rappel. Avec un tel mécanisme, la poignée est naturellement dans une position neutre. Un utilisateur peut furtivement pivoter la poignée vers une position angulaire différente de la position neutre. Le mécanisme de rappel ramène ensuite la poignée en position neutre, dès que l'utilisateur lâche la poignée.

De telle têtes thermostatiques intègrent souvent des mécanismes de rappel complexes qui sont volumineux et onéreux.

Dans ce contexte, il est nécessaire de fournir une tête thermostatique intégrant un système mécanique de rappel simple, peu encombrant et peu cher.

### EXPOSE DE L'INVENTION

A cet effet, selon un premier aspect, il est proposé une tête thermostatique électronique pour une vanne, la tête thermostatique électronique comprenant une base et une poignée tournante liée à la base, la poignée tournante étant montée en rotation autour d'un axe longitudinal avec un mouvement angulaire limité afin de passer d'une position neutre à une première position fonctionnelle ou une deuxième position fonctionnelle, la tête thermostatique étant caractérisée en ce que :
- la poignée comprend une butée en rotation.
- la base comprend deux lames élastiques, lorsque la poignée est en position neutre chaque lame élastique est en contact avec la butée, une première lame élastique permet de rappeler la poignée de la première position fonctionnelle à la position neutre et une deuxième lame élastique permet de rappeler la poignée de la deuxième position fonctionnelle à la position neutre.

Ainsi, la tête thermostatique intègre un système mécanique de rappel simple, peu encombrant et peu cher.

Selon une disposition particulière, la poignée est mobile en translation selon une direction de l'axe longitudinal, afin de passer de la position neutre à une troisième position fonctionnelle, les deux lames élastiques permettant de rappeler la poignée de la troisième position fonctionnelle à la position neutre.

Selon une disposition particulière, la butée empêche la rotation de la poignée lorsque la poignée est déplacée en translation, et la butée empêche la translation de la poignée lorsque la poignée est déplacée en rotation.

Selon une disposition particulière, la butée comprend une embase adaptée pour que lorsque la poignée est déplacée en troisième position fonctionnelle, l'embase déforme les lames élastiques qui tendent à retrouver leur forme en rappelant la poignée en position neutre.

Selon une disposition particulière, l'embase est adaptée pour être en appui contre une surface de la base lorsque la poignée est déplacée en rotation de la position neutre vers la première position fonctionnelle ou la deuxième position fonctionnelle, pour bloquer en translation la poignée lorsque la poignée est déplacée en rotation.

Selon une disposition particulière, l'embase présente une empreinte adaptée pour accueillir un relief complémentaire de la base lorsque la poignée est en troisième position fonctionnelle, le positionnement du relief complémentaire dans l'empreinte bloquant en rotation la poignée.

Selon une disposition particulière, la butée comprend une dent en saillie sur l'embase adaptée pour qu'en position neutre la dent soit en contact avec chaque lame élastique et lorsque la poignée est en première ou deuxième position fonctionnelle la dent déforme la lame élastique correspondante qui tend à retrouver sa forme en rappelant la poignée en position neutre.

Selon une disposition particulière, la poignée comprend un plot d'appui sur au moins un contacteur de la base.

Selon une disposition particulière, la base comprend un premier contacteur, et un deuxième contacteur, les deux contacteurs étant positionnés de sorte que le plot appuie sur le premier contacteur lorsque la poignée est en première position fonctionnelle, et le plot appuie sur le deuxième contacteur lorsque la poignée est en deuxième position fonctionnelle.

Selon une disposition particulière, la base comprend un troisième contacteur positionné de sorte que la dent appuie sur le troisième contacteur lorsque la poignée est en troisième position fonctionnelle.

Selon un autre aspect, il est aussi proposé un radiateur comprenant une tête thermostatique électronique selon l'invention.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre une tête thermostatique électronique ;
[Fig. 2] est une représentation éclatée de la poignée et la base de la tête thermostatique ;
[Fig. 3] est une représentation de la base de la tête thermostatique électronique ;
[Fig. 4] est une représentation de la poignée de la tête thermostatique électronique ;
[Fig. 5] illustre l'assemblage de la poignée et de la base de la tête thermostatique électronique ;

### EXPOSE DETAILLE DE MODES DE REALISATION

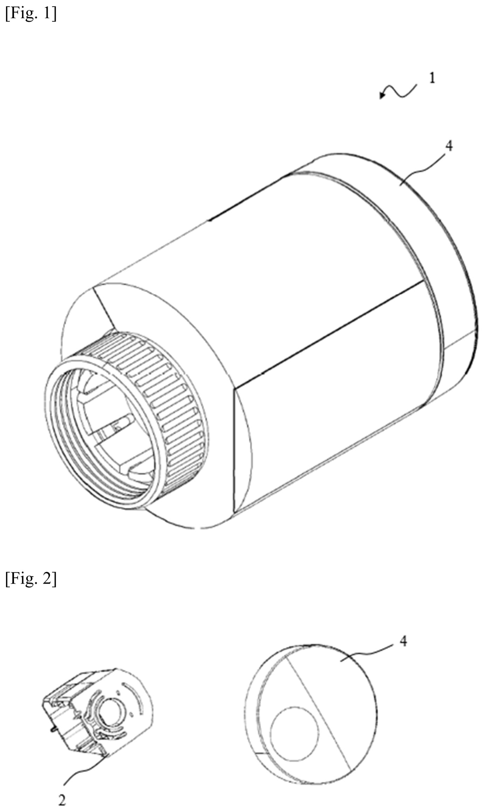

En référence à la Fig. 1, il est proposé une tête thermostatique électronique 1 pour une vanne. Typiquement la tête thermostatique électronique 1 est adaptée pour être fixée sur une vanne d'un radiateur à eau chaude.

La tête thermostatique électronique 1 comprend notamment une base 2 et une poignée 4 tournante liée à la base 2.

La poignée 4 tournante est montée en rotation autour d'un axe longitudinal avec un mouvement angulaire limité afin de passer d'une position neutre à une première position fonctionnelle ou une deuxième position fonctionnelle. En d'autres termes, la poignée 4 peut pivoter entre trois positions : la position neutre, la première position fonctionnelle et la deuxième position fonctionnelle.

Selon le mode de réalisation ici présenté, la poignée 4 comprend une pluralité de dents encliquetables 20 concentriques adaptées pour être encliquetées dans un trou 22 de la base 2. La liaison des dents encliquetables 20 dans le trou 22 assure le montage en rotation de la poignée 4 sur la base 2.

D'une manière particulièrement astucieuse, tel que cela sera détaillé ci-après, la poignée 4 comprend une butée 6 en rotation et la base 2 comprend deux lames élastiques 8. Ainsi, lorsque la poignée 4 est en position neutre chaque lame élastique 8 est alors en contact avec la butée 6. Une première lame élastique 8 permet de rappeler la poignée 4 de la première position fonctionnelle à la position neutre et une deuxième lame élastique 8 permet de rappeler la poignée 4 de la deuxième position fonctionnelle à la position neutre. D'une manière particulièrement astucieuse, lorsque la poignée est pivotée en première ou deuxième position fonctionnelle, la lame élastique correspondante est élastiquement déformée par la butée. Dès que l'effort de rotation appliqué à la poignée est relâché (i.e. dès qu'un utilisateur lâche la poignée), la lame élastique qui est déformée exerce un effort de rappel sur la butée 6, ce qui ramène la poignée en position neutre.

En outre, la poignée 4 est mobile en translation selon une direction de l'axe longitudinal, afin de passer de la position neutre à une troisième position fonctionnelle, les deux lames élastiques 8 permettant de rappeler la poignée 4 de la troisième position fonctionnelle à la position neutre. D'une manière particulièrement astucieuse, lorsque la poignée est amenée en troisième position fonctionnelle, les lames élastiques sont élastiquement déformées par la butée. Dès que l'effort de translation appliqué à la poignée est relâché (i.e. dès qu'un utilisateur lâche la poignée), les lames élastiques exercent un effort de rappel sur la butée 6, ce qui ramène la poignée 4 en position neutre.

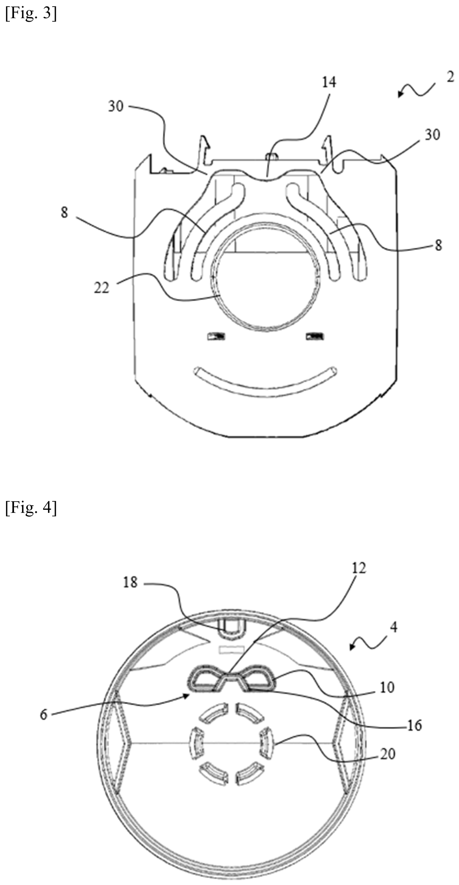

Tel que schématisé sur la Fig.3 selon une disposition particulière, chaque lame élastique 8 présente une forme d'arc. En d'autres termes, selon une disposition particulière, chaque lame élastique 8 présente une géométrie courbe. En outre, selon l'exemple ici présenté, les lames élastiques 8 sont disposées en vis-à-vis d'une manière sensiblement concentrique par rapport à un centre de leur rayon (arc) de courbure.

D'une manière particulièrement avantageuse, la butée 6 empêche la rotation de la poignée 4 lorsque la poignée 4 est déplacée en translation, et la butée 6 empêche la translation de la poignée 4 lorsque la poignée 4 est déplacée en rotation.

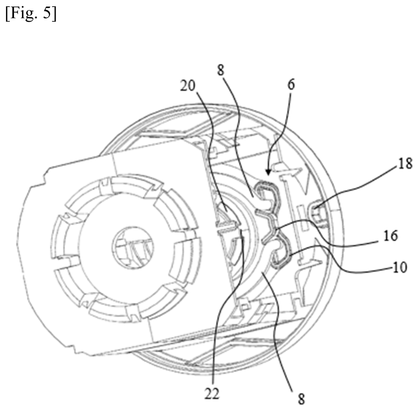

Tel que schématisé sur les Figs. 4 et 5, la butée 6 comprend une embase 10 adaptée pour que lorsque la poignée 4 est déplacée en troisième position fonctionnelle, l'embase 10 déforme les lames élastiques 8 qui tendent à retrouver leurs formes en rappelant la poignée en position neutre.

De plus, l'embase 10 est adaptée pour être en appui contre une surface 30 de la base 2 lorsque la poignée 4 est déplacée en rotation de la position neutre vers la première position fonctionnelle ou la deuxième position fonctionnelle, pour bloquer en translation la poignée 4 lorsque la poignée 4 est déplacée en rotation.

En outre, selon une disposition particulièrement avantageuse, l'embase 10 présente une empreinte 12 adaptée pour accueillir un relief complémentaire 14 de la base 2 lorsque la poignée 4 est en troisième position fonctionnelle, le positionnement du relief complémentaire 14 dans l'empreinte 12 bloquant en rotation la poignée 4.

En outre, la butée 6 comprend une dent 16 en saillie sur l'embase 10. La dent 16 est adaptée pour qu'en position neutre la dent 16 soit en contact avec chaque lame élastique 8 et lorsque la poignée 4 est en première ou deuxième position fonctionnelle la dent 16 déforme la lame élastique 8 correspondante qui tend à retrouver sa forme en rappelant la poignée 4 en position neutre.

En outre, la poignée 4 comprend un plot 18 d'appui sur au moins un contacteur de la base 2.

La base 2 comprend un premier contacteur et un deuxième, les deux contacteurs étant positionnés de sorte que le plot 18 appuie sur le premier contacteur lorsque la poignée 4 est en première position fonctionnelle, et le plot 18 appuie sur le deuxième contacteur lorsque la poignée 4 est en deuxième position fonctionnelle.

Selon une disposition particulière, la base 2 comprend un troisième contacteur.

Selon un premier mode de réalisation, le troisième contacteur est positionné de sorte que le plot 18 appuie sur le troisième contacteur lorsque la poignée 4 est en troisième position fonctionnelle.

Selon un deuxième mode de réalisation, le troisième contacteur est positionné de sorte que la dent 16 appuie sur le troisième contacteur lorsque la poignée 4 est en troisième position fonctionnelle.

Selon un autre aspect, il est aussi proposé un radiateur comprenant la tête thermostatique électronique.

## Revendications

1. Tête thermostatique électronique (1) pour une vanne, la tête thermostatique électronique (1) comprenant une base (2) et une poignée (4) tournante liée à la base (2), la poignée (4) tournante étant montée en rotation autour d'un axe longitudinal avec un mouvement angulaire limité afin de passer d'une position neutre à une première position fonctionnelle ou une deuxième position fonctionnelle, la tête thermostatique (1) étant **caractérisée en ce que** :
- la poignée (4) comprend une butée (6) en rotation.
- la base (2) comprend deux lames élastiques (8), lorsque la poignée (4) est en position neutre chaque lame élastique (8) est en contact avec la butée (6), une première lame élastique (8) permet de rappeler la poignée (4) de la première position fonctionnelle à la position neutre et une deuxième lame élastique (8) permet de rappeler la poignée (4) de la deuxième position fonctionnelle à la position neutre.

2. Tête thermostatique électronique (1) selon la revendication 1, dans laquelle la poignée (4) est mobile en translation selon une direction de l'axe longitudinal, afin de passer de la position neutre à une troisième position fonctionnelle, les deux lames élastiques (8) permettant de rappeler la poignée de la troisième position fonctionnelle à la position neutre.

3. Tête thermostatique électronique (1) selon la revendication 2, dans laquelle la butée (6) empêche la rotation de la poignée (4) lorsque la poignée (4) est déplacée en translation, et la butée (6) empêche la translation de la poignée (4) lorsque la poignée (4) est déplacée en rotation.

4. Tête thermostatique électronique (1) selon l'une quelconque des revendications précédentes, dans lequel la butée (6) comprend une embase (10) adaptée pour que lorsque la poignée (4) est déplacée en troisième position fonctionnelle, l'embase (10) déforme les lames élastiques (8) qui tendent à retrouver leur forme en rappelant la poignée (4) en position neutre.

5. Tête thermostatique électronique (1) selon les revendications 3 et 4 en combinaison, dans laquelle l'embase (10) est adaptée pour être en appui contre une surface (30) de la base (2) lorsque la poignée (4) est déplacée en rotation de la position neutre vers la première position fonctionnelle ou la deuxième position fonctionnelle, pour bloquer en translation la poignée (4) lorsque la poignée (4) est déplacée en rotation.

6. Tête thermostatique électronique (1) selon les revendications 3 et 4 en combinaison dans laquelle l'embase (10) présente une empreinte (12) adaptée pour accueillir un relief complémentaire (14) de la base (2) lorsque la poignée (4) est en troisième position fonctionnelle, le positionnement du relief complémentaire (14) dans l'empreinte (12) bloquant en rotation la poignée (4).

7. Tête thermostatique électronique (1) selon l'une quelconque des revendications 4 ou 5, dans laquelle la butée (6) comprend une dent (16) en saillie sur l'embase (10) adaptée pour qu'en position neutre la dent (16) soit en contact avec chaque lame élastique (8) et lorsque la poignée (4) est en première ou deuxième position fonctionnelle la dent (16) déforme la lame élastique (8) correspondante qui tend à retrouver sa forme en rappelant la poignée en position neutre.

8. Tête thermostatique électronique (1) selon l'une quelconque des revendications précédentes, dans lequel la poignée (4) comprend un plot (18) d'appui sur au moins un contacteur de la base (2).

9. Tête thermostatique électronique (1) selon la revendication 7, dans lequel la base (2) comprend un premier contacteur, et un deuxième contacteur, les deux contacteurs étant positionnés de sorte que le plot (18) appuie sur le premier contacteur lorsque la poignée (4) est en première position fonctionnelle, et le plot (18) appuie sur le deuxième contacteur lorsque la poignée (4) est en deuxième position fonctionnelle.

10. Tête thermostatique électronique (1) selon la revendication 6, dans laquelle la base (2) comprend un troisième contacteur positionné de sorte que la dent (16) appuie sur le troisième contacteur lorsque la poignée (4) est en troisième position fonctionnelle.

11. Radiateur comprenant une tête thermostatique électronique (1) selon l'une quelconque des revendications 1 à 10.
